# EUROPEAN PATENT SPECIFICATION

(11) **EP 3 829 914 B1**
(45) Date of publication and mention of the grant of the patent: **23.03.2022**
(21) Application number: 19758548.2
(22) Date of filing: 02.08.2019
(51) Int. Cl.: B60K 7/00

(54) **A LUBRICANT SUPPORTED ELECTRIC MOTOR WITH BEARING SUPPORT**
SCHMIERMITTELUNTERSTÜTZTER ELEKTROMOTOR MIT LAGERHALTERUNG
MOTEUR ÉLECTRIQUE SUPPORTÉ PAR UN LUBRIFIANT DOTÉ D'UN SUPPORT DE PALIER

(30) Priority: 02.08.2018 US 201862713595 P; 12.10.2018 US 201862744780 P; 01.08.2019 US 201916529253
(43) Date of publication of application: 09.06.2021
(73) Proprietor: Neapco Intellectual Property Holdings, LLC, Farmington Hills, MI 48331 (US)
(72) Inventor: REMBOSKI, Donald, Ann Arbor, MI 48105 (US); DEDO, Jacqueline, Wolverine Lake, MI 48390 (US); VERSTEYHE, Mark, 8020 Oostkamp (BE)
(74) Representative: Frey, Sven Holger
(86) International application number: PCT/US2019/044779
(87) International publication number: WO 2020/028741

(56) References cited:
- EP-A1- 2 108 832
- US-A- 2 937 294
- US-A1- 2006 144 626

## Description

### FIELD OF THE INVENTION

The present invention relates generally to a wheel-end electric motor. More specifically, the present invention relates to a wheel-end lubricant supported electric motor with additional bearing support.

### BACKGROUND OF THE INVENTION

This section provides a general summary of background information and the comments and examples provided in this section are not necessarily prior art to the present invention.

Various drivelines in automotive, truck, and certain off-highway applications take power from a central prime mover and distribute the power to the wheels using mechanical devices such as transmissions, transaxles, propeller shafts, and live axles. These configurations work well when the prime mover can be bulky or heavy, such as, for example, various internal combustion engines ("ICE"). However, more attention is being directed towards alternative arrangements of prime movers that provide improved environmental performance, eliminate mechanical driveline components, and result in a lighter-weight vehicle with more space for passengers and payload.

"On wheel", "in-wheel" or "near-wheel" motor configurations (i.e, wheel-end motors) are one alternative arrangement for the traditional ICE prime mover that distribute the prime mover function to each or some of the plurality of wheels via one or more motors disposed on, within, or proximate to the plurality of wheels. For example, in one instance, a traction motor, using a central shaft though a rotor and rolling element bearings to support the rotor within a stator, can be utilized as the "on wheel", "in wheel" or "near wheel" motor configuration. In another instance, a lubricant supported electric motor, such as described in U.S. Application Serial No. 16/144,002, can be utilized as the "on wheel", "in wheel" or "near wheel" motor configuration. While each of these motor configurations result in a smaller size and lighter weight arrangement as compared to the prime movers based on the internal combustion engine, they each have certain drawbacks and disadvantages. For example, each of these wheel-end electric motor arrangements, when utilized in automotive applications, suffer from failures when the wheel drives over a discontinuous surface (e.g., a pothole or a curb). The shock to the wheel end from the rapid acceleration of the wheel leads to very large forces on the wheel-end motor that often cause the motor's rotor to come into contact with the motor's stator, causing the wheel-end electric motor to fail.

In an effort to address this drawback and disadvantage, various heavy and large support structures have been added to the wheel-end electric motors to withstand the shock load environment. In other words, electric motors for wheel end applications are often engineered with extra mechanical structures, such as extra heavy shafts, and extra heavy bearings, to reduce the probability of failure when the associated wheel encounters a discontinuous road surface. However, adding this extra mechanical support structure to the wheel end motor increases mass and package size, both of which are not optimal for wheel-end applications. Thus, the utilization of wheel-end motors with additional mechanical support structures results in motors that are too heavy and large to be useful and practical for wheel-end applications. Accordingly, there remains a need for improvements to "on wheel", "in wheel" or "near wheel" motors which improve performance in a wheel-end prime-mover application, particularly when the wheel-end electric motor encounters shock load environments created by travel over discontinuous road surfaces. US 2006/144626 A1 discloses an in-wheel motor including a motor generating motive power, a planetary gear arranged toward a wheel disc relative to the motor to reduce an output of the motor, and a shaft arranged toward the wheel disc relative to the planetary gear and connected to a planetary carrier. The shaft is connected to a constant velocity joint transmitting the motive power to the wheel disc.

### SUMMARY OF THE INVENTION

The subject invention is generally directed to a wheel end lubricant supported electric motor that includes both lubricant support as well as bearing support for optimizing performance of the wheel-end electric motor in shock load environments. It has been found that the utilization of lubricant as support for the rotor and stator, in addition to the support provided by the bearing elements, advantageously addresses and overcomes many of the failures arising when the wheel-end electric motor is utilized in a wheel-end application and encounters wheel-end shock loading from travel over discontinuous road surfaces. Specifically, the auxiliary support provided by the lubricant contributes to radial, structural stiffness of the rotor and stator to help support the rotor in case of high shock loading. The wheel-end motor with lubricant support is also light and small, and thus contributes to the overall design strategy for eliminating weight and size from automobiles and land vehicles. Other advantages will be appreciated in view of the following more detailed description of the subject invention.

### BRIEF DESCRIPTION OF THE DRAWINGS

The drawings described herein are for illustrative purposes only of selected embodiments and not all possible implementations, and are not intended to limit the scope of the present invention.
Figure 1 is a schematic view of a wheel-end lubricant supported electric motor according to a first aspect of the subject invention;
Figure 2 is a schematic view of a wheel-end lubricant supported electric motor according to a second aspect of the subject invention; and
Figure 3 is a schematic view of a wheel-end lubricant supported electric motor according to a third aspect of the subject invention.

### DETAILED DESCRIPTION OF THE ENABLING EMBODIMENTS

Example embodiments of a wheel-end lubricant supported electric motor in accordance with the present invention will now be more fully described. Each of these example embodiments are provided so that this invention is thorough and fully conveys the scope of the inventive concepts, features and advantages to those skilled in the art. To this end, numerous specific details are set forth such as examples of specific components, devices and mechanisms associated with the wheel-end lubricant supported electric motor to provide a thorough understanding of each of the embodiments associated with the present invention.

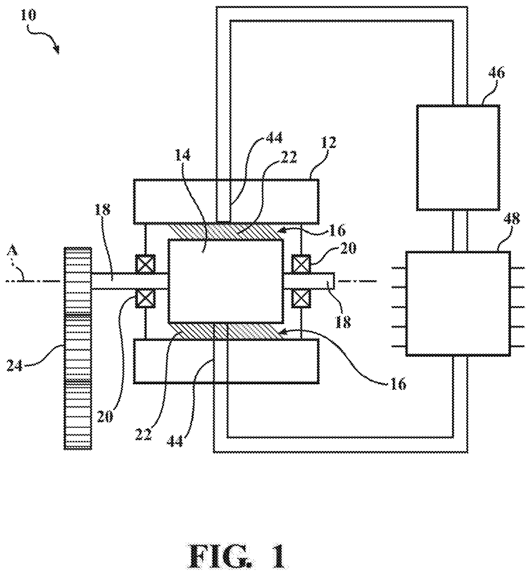

Figures 1-3 generally illustrate a wheel-end lubricant supported electric motor **10** in accordance with various aspects of the present invention. The lubricant supported electric motor **10** is preferably employed on a vehicle driveline including one or more drive wheels. For example, the lubricant supported electric motor **10** may be incorporated into the front pair of wheels of a vehicle (for front wheel drive). Alternatively, the lubricant supported electric motor **10** may be incorporated into the rear pair of wheels of the vehicle (for rear wheel drive). The lubricant supported electric motor **10** may also be incorporated into all four wheels (of a four wheel vehicle) for four wheel drive. It should be understood that one of the lubricant supported electric motors **10** may be selectively operated such that, using the previous example, the front pair of motors may not be continuously activated, or only activated in a braking function (i.e., regenerative braking). Additionally and alternatively, for a vehicle with more (or less) than four wheels (e.g., a semi-trailer truck, a bus, a tram, a motorcycle, bicycle, scooter, aircraft), the lubricant supported electric motor **10** may be included on one or more (including all) of the wheels. Additionally, it is contemplated that the lubricant supported electric motor **10** may be incorporated into devices other than strictly transportation vehicles, such as toys, medical devices, construction equipment, robotic actuator joints, manufacturing equipment and may be connected to propulsion devices other than wheels and/or tires (tracks, propellers, turbines).

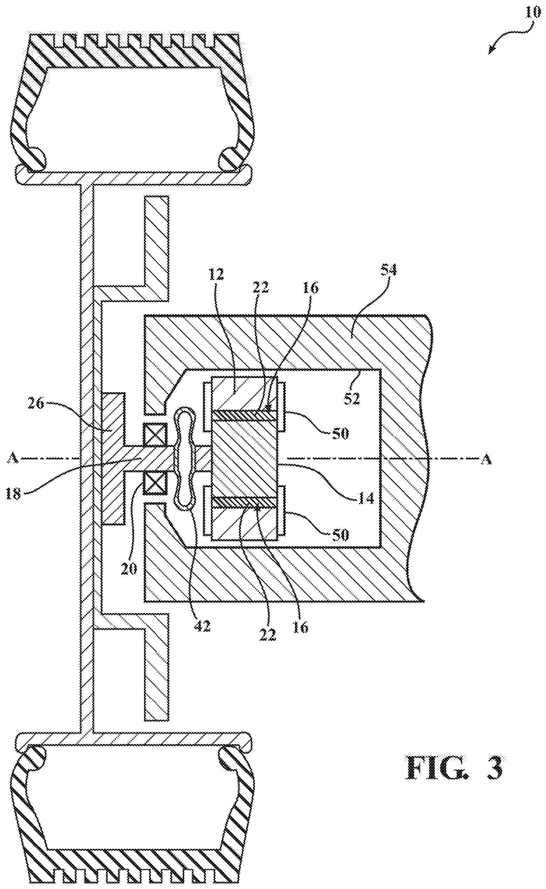

As best illustrated in Figures 1-3, the lubricant supported electric motor **10** includes a stator **12** and a rotor **14** extending along an axis **A** and movably disposed within the stator **12** to define a gap **16** therebetween. A central shaft **18** extends along the axis **A** and outwardly from the rotor **14** for supporting the rotor **14** within the stator **12.** As illustrated in Figures 1 and 3, according to a first embodiment of the present invention, at least one bearing **20** is disposed in engaging and supporting relationship with the central shaft **18** to provide bearing support to the rotor **14** of the lubricant supported electric motor **10.** As further illustrated in Figure 1, the at least one bearing element **20** can include a plurality of bearing elements **20** to provide this bearing support. For example, the central shaft **18** can extend outwardly from opposing axial sides of the rotor **14** and the plurality of bearing elements **20** can include a pair of bearing elements **20** each disposed on axially opposite sides of the stator **12** and rotor **14** and in supporting relationship with the central shaft **18.** In one arrangement, the bearing elements **20** can be comprised of plain bearings. In another arrangement, the bearing elements **20** can be comprised of rolling bearings. However, other forms of bearing elements can be utilized without departing from the scope of the subject invention.

As further illustrated in Figures 1-3, a lubricant **22** is disposed in the gap 16 for providing additional or auxiliary lubricant support of the rotor **14** within the stator **12.** In other words, the lubricant **22** may act as a buffer (e.g., suspension) between the rotor **14** and stator **12** minimizing or preventing contact therebetween and providing lubricant support that complements the bearing support provided by the at least one bearing element **20.** The coupling of conventional, bearing elements with the additional, auxiliary support of the lubricant **22** advantageously results in a wheel-end lubricant supported electric motor **10** which is more robust to shock and vibration loading when the wheel-end lubricant supported electric motor **10** is subjected to shock load environments associated with encountering rough, discontinuous road surfaces.

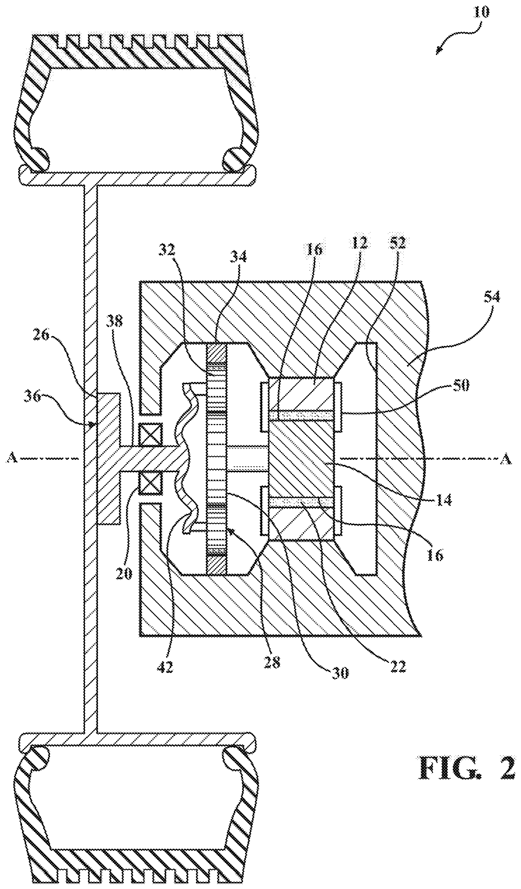

As further illustrated in Figures 1-3, the central shaft **18** of the rotor **14** is operably connected to a wheel of a vehicle. For example, as illustrated in Figures 1 and 2, the central shaft **18** of the rotor **14** can be operably interconnected to a drive assembly **24** for coupling the wheel-end lubricant supported electric motor **10** to one of the plurality of wheels of a vehicle. However, as illustrated in Figure 3, in another embodiment, the central shaft **18** of the rotor **14** can extend to and include an integral wheel hub mount **26** extending transverse to the axis **A** and configured for direct connection to a wheel of a vehicle, or a disk brake rotor associated with the wheel. In either arrangement, the stator **12** and rotor **14** are configured to exert an electromagnetic force therebetween to convert electrical energy into mechanical energy, moving the rotor **14** and ultimately driving the wheel operably coupled to the wheel-end lubricant supported electric motor **10**. When a drive assembly **24** is utilized, the drive assemblies **24** may provide one or more reduction ratios between the wheel-end lubricant supported electric motor **10** and the wheel in response to movement of the rotor **14**.

As best illustrated in Figure 2, in one arrangement, the drive assembly **24** may include a planetary gear reducer **28**, generally shown, in which the central shaft **18** is interconnected to a sun gear **30**, which is configured to engage one or more planetary gears **32**. Additionally, and alternatively, the planetary gear reducer **28** can include a ring gear **34** which is configured to engage the one or more planetary gears **32** of the planetary gear reducer **28**. The planetary gear reducer **28** may be configured to provide improved power density when compared to a traditional parallel axis drivetrains. The multiple gear contacting surfaces of the planetary gear reducer **28** distribute the axial load evenly on the axis **A** of the lubricant supported electric motor **10**. Additionally, the planetary gear reducer **28** includes only a few contacting surfaces of the sun gear **30**, planetary gears **32**, and the ring gears **34**. Further, the planetary gear reducer **28** can evenly distribute the load from impacts, such as from a vehicle suspension (e.g., a pothole), to the lubricant supported electric motor **10**. This wheel mounted lubricant supported electric motor **10** also includes compliance (i.e., flex) in the components of the planetary gear reducr **28** (i.e., ring, sun and planet gears) to avoid an over-constrained wheel mounted drivetrain and excessively close tolerance. However, as noted above, the drive assembly **24** may alternatively include one or more parallel axis gears.

As further illustrated in the aspect of Figure 2, when the lubricant supported electric motor **10** is operably connected with the planetary gear reducer **28**, a wheel hub assembly **36** is also operably connected with the planetary gear reducer **28** to establish the operable connection of the lubricant supported electric motor **10** to a wheel of a vehicle. The wheel hub assembly **36** includes a central hub axle **38** extending in axially aligned relationship with the axis **A** from a wheel hub mount **26'** configured to receive a wheel attachment (e.g., tire/wheel assembly, track assembly) and/or a brake attachment (e.g., brake assembly, disk brake rotor) to a gear mount **40** disposed in operably interconnected relationship with the planetary gears **32**. In this arrangement, the at least one bearing **20'** is disposed in supporting and engaging relationship with the central hub axle **38** instead of the central shaft **18** of the lubricant supported electric motor **10**. The weight and package space requirements of the lubricant supported electric motor **10** can advantageously be reduced in this arrangement by having the lubricant supported electric motor **10** directly support the sun gear **30** (i.e., input gear) of the planetary gear reducer **28**. In other words, the load carrying capacity of the lubricant supported electric motor **10** can advantageously be used to carry the sun gear **30** of the planetary gear reducer **28**. This type of configuration may also be used to support the input of other forms of mechanical speed reduction such as traction drives, variable ratio traction drives and chain drives.

As further illustrated in Figure 2, the gear mount **40** of the wheel hub assembly includes a wavy spring **42** disposed between the at least one bearing **20'** and the planetary gears **32**. In this arrangement, the central hub axle **38** is stiff in bending and torsional loads to the left of the at least one bearing **20'** and compliant in bending but stiff in torsion to the right of the at least one bearing **20'**. In an alternative arrangement, and as best illustrated in Figure 3, when the lubricant supported electric motor **10** is connected directly to the wheel, the central shaft **18** includes the wavy spring **42** disposed between the at least one bearing **20** and the rotor **14**. Similar to the arrangement in Figure 2, the central shaft **18** is stiff in bending and torsional loads to the left of the at least one bearing **20** and compliant in bending but stiff in torsion to the right of the at least one bearing **20**.

As best illustrated Figure 1, the stator **12** defines a passageway **44** disposed in fluid communication with the gap **16** for introducing the lubricant **22**. However, the passageway **44** could be provided on any other components of the lubricant supported electric motor **10.** The lubricant supplied journal bearing fitted between the rotor **14** and stator **12** provides the wheel-end lubricant supported electric motor **10** with hydrostatic and/or hydrodynamic support structures. In other words, the lubricant supply to the gap **16** determines the hydrodynamic and hydrostatic properties of the wheel-end lubricant supported electric motor **10**, and the characteristics of the lubricant supply determine how the lubricant supported electric motor **10** with both bearing and lubricant support behaves in operation. For example, according to an aspect, the lubricant **22** may have a very, low viscosity. According to another aspect, the lubricant **22** may be a liquid with a significant amount of entrained gas. This reduces shear loss in normal operation and provides for some hydrodynamic bearing support (i.e., auxiliary/additional lubricant support) and some boundary mode lubrication. In all cases, the lubricant **22** can also help to conduct heat away from heat-generating parts of the wheel-end motor **10**, such as the stator windings.

According to an aspect, the lubricant **20** may be cycled or pumped through the passageway **44** and into the gap **16** in various ways. For example, as best illustrated in Figure 1, a high pressure source **46** (e.g., a pump) of the lubricant **22** may be fluidly coupled to a low pressure source (e.g., a sump, not shown) of the lubricant **22**, where the lubricant may move from the high pressure source to the lower pressure source, through the passageway **44** and into the gap **16.** Rotation of the rotor **14** relative to the stator **12** may operate as a self-pump to drive lubricant **20** through the passageway **30** and into the gap **16.** As further illustrated in Figure 1, the high pressure source (e.g. pump) **46** may be fluidly coupled to a heat exchanger **48** for removing heat from the lubricant **22.** As further shown in Figure 1, the rotor **14** presents an inner raceway and the stator **12** presents an outer raceway. According to an aspect, each of the inner and outer raceways are configured for boundary lubrication and minimal lubricant supply. Although not expressly illustrated in Figures 2 and 3, it should be understood that each of the passageway **44**, the high pressure source **46**, and the heat exchanger **48** are also included and incorporated into each of these additional aspects of the lubricant supported electric motor **10**.

As best illustrated in Figures 2 and 3, the lubricant supported electric motor 10 may also include a plurality of thrust bearing plates **50** disposed in overlaying relationship with opposing sides of the rotor and the stator, and extending transverse to the axis on opposing sides of the lubricant supported electric motor **10** to cover the gap **16** and seal/retain the lubricant **22** therein. The thrust bearing plates **50** also support the axial load of the lubricant supported electric motor **10** and thus assist in keeping the rotor **14** centered within the stator **12**. The thrust bearing plates **50** may also be configured to prevent contaminants, such as other non-compatible lubricants, dirt, or other debris, from entering the gap **16** of the lubricant supported electric motor **10**. In this example, the thrust bearing plates **50** maintain the separation of the lubricant **22** in the gap **16** from other materials disposed in and around an environment of the lubricant supported motor.

As best illustrated in Figures 2 and 3, the lubricant supported electric motor **10**, when mounted in its "on-wheel", "in-wheel", or "near-wheel" configuration, can be disposed inside of an interior cavity **52** of a housing **54**. For example, as best illustrated in Figure 3, the housing **54** can be comprised of a wheel knuckle support that houses the lubricant supported electric motor **10**. In this instance, the housing **54**, e.g, wheel support knuckle, may include or incorporate the at least one bearing **20** which supports the central shaft **18** extending outwardly from the rotor **14** of the lubricant supported electric motor **10**. In this arrangement, a disc brake rotor is also shown connected to the wheel and/or tire, and as well as the wheel hub of the central shaft **15**. Additionally and alternatively, another lubricant may be disposed within the cavity **52** defined by the wheel support knuckle and retained within by the at least one bearing **18**.

## Claims

1. A wheel-end electric motor (10) comprising:
a stator (12);
a rotor (14) extending along an axis (A) and movably disposed within said stator (12) to define a gap (16) therebetween;
a central shaft (18) extending along said axis (A) and outwardly from said rotor (14);
at least one bearing element (20) disposed in supporting relationship with said central shaft (18) for providing bearing support of said rotor (14) within said stator (12); and
a lubricant (22) disposed in said gap (16) for providing auxiliary lubricant support of said rotor (14) within said stator (12).

2. A wheel-end electric motor (10) as set forth in Claim 1, wherein said at least one bearing element (20) includes a plurality of bearing elements (20).

3. A wheel-end electric motor (10) as set forth in Claim 2, wherein said central shaft (18) extends outwardly from opposing axial sides of said rotor (14) and said plurality of bearing elements (20) include a pair of bearing elements (20) each disposed adjacent one of said axially opposite sides of said rotor (14) in supporting relationship with a respective portion of said central shaft (18).

4. A wheel-end electric motor (10) as set forth in Claim 1, wherein said central shaft (18) of said rotor (14) extends to a wheel hub mount (26) being integral with said central shaft (18) and configured to receive a wheel of a vehicle.

5. A wheel-end electric motor (10) as set forth in Claim 5, wherein said central shaft (18) includes a wavy spring (47) disposed between said at least one bearing (20) and said rotor (14).

6. A wheel-end electric motor (10) as set forth in Claim 1, wherein said central shaft (18) of said rotor (14) is operably interconnected to a drive assembly (24) for coupling the wheel-end electric motor (10) to a wheel of a vehicle.

7. A wheel-end electric motor (10) as set forth in Claim 6, wherein said drive assembly (24) is comprised of a planetary gear reducer (28).

8. A wheel-end electric motor (10) as set forth in Claim 1, further comprising a plurality of thrust bearing plates (50) disposed in overlaying relationship with axially opposing sides of said rotor (14) and said stator (12) to cover said gap (16) for sealing and retaining said lubricant within said gap (16).

9. A wheel-end electric motor (10) comprising:
a stator (12);
a rotor (14) extending along an axis (A) and movably disposed within said stator (12) to define a gap (16) therebetween;
a central shaft (18) extending outwardly from said rotor (14) and operably connected with a drive assembly (24);
a wheel hub assembly (36) operably connected with said drive assembly (24) for coupling the wheel-end electric motor (10) to a wheel of a vehicle;
at least one bearing element (20) disposed in supporting relationship with said wheel hub assembly (36); and
a lubricant (22) disposed in said gap (16) for providing lubricant support of said rotor (14) within said stator (12).

10. A wheel-end electric motor (10) as set forth in Claim 9, wherein said drive assembly (24) is comprised of a planetary gear reducer (28).

11. A wheel-end electric motor (10) as set forth in Claim 10, wherein said wheel hub assembly (36) includes a central hub axle (38) extending in axially aligned relationship with said axis (A) from a wheel hub mount (26) to a gear mount (40) disposed in operably interconnected relationship said planetary gear reducer (28) and said at least one bearing (20) is disposed in supporting and engaging relationship with said central hub axle (38).

12. A wheel-end electric motor (10) as set forth in Claim 11, wherein said wheel hub assembly (36) includes a wavy spring (42) disposed between said at least one bearing (20) and said planetary gear reducer (28).

13. A wheel-end electric motor (10) as set forth in Claim 9, further comprising a plurality of thrust bearing plates (50) disposed in overlaying relationship with axially opposing sides of said rotor (14) and said stator (12) to cover said gap (16) for sealing and retaining said lubricant (28) within said gap (16).

14. A wheel-end electric motor (10) as set forth in Claim 11, wherein said central shaft (18) is interconnected to a sun gear (30) of said planetary gear reducer (28) and said gear mount (40) is operably interconnected to planetary gears (32) of said planetary gear reducer (28).

## Patentansprüche

1. Radseitiger Elektromotor (10), der Folgendes aufweist:
einen Stator (12);
einen Rotor (14), der sich entlang einer Achse (A) erstreckt und innerhalb des Stators (12) beweglich angeordnet ist, um einen Spalt (16) dazwischen zu bilden;
eine zentrale Welle (18), die sich entlang der Achse (A) und von dem Rotor (14) nach außen erstreckt;
wenigstens ein Lagerelement (20), das in stützender Beziehung mit der zentralen Welle (18) angeordnet ist, um eine Lagerabstützung des Rotors (14) innerhalb des Stators (12) zu erzeugen; und
ein Schmiermittel (22), das sich in dem Spalt (16) befindet, um eine hilfsweise Schmiermittelabstützung des Rotors (14) innerhalb des Stators (12) zu erzeugen.

2. Radseitiger Elektromotor (10) nach Anspruch 1, wobei das wenigstens eine Lagerelement (20) eine Vielzahl von Lagerelementen (20) aufweist.

3. Radseitiger Elektromotor (10) nach Anspruch 2, wobei die zentrale Welle (18) sich von gegenüberliegenden axialen Seiten des Rotors (14) nach außen erstreckt und die Vielzahl von Lagerelementen (20) ein Paar von Lagerelementen (20) aufweist, die jeweils benachbart zu einer der axial gegenüberliegenden Seiten des Rotors (14) in abstützender Beziehung mit einem jeweiligen Abschnitt der zentralen Welle (18) angeordnet ist.

4. Radseitiger Elektromotor (10) nach Anspruch 1, wobei die zentrale Welle (18) des Rotors (14) sich zu einer Radnabenlagerung (26) erstreckt, die einteilig mit der zentralen Welle (18) ausgebildet und dafür vorgesehen ist, ein Rad eines Fahrzeugs aufzunehmen.

5. Radseitiger Elektromotor (10) nach Anspruch 5, wobei die zentrale Welle (18) eine Wellenfeder (42) aufweist, die zwischen dem wenigstens einen Lagerelement (20) und dem Rotor (14) angeordnet ist.

6. Radseitiger Elektromotor (10) nach Anspruch 1, wobei die zentrale Welle (18) des Rotors (14) betriebsfähig mit einer Antriebsanordnung (24) verbunden ist, um den radseitigen Elektromotor (10) mit einem Rad eines Fahrzeugs zu verbinden.

7. Radseitiger Elektromotor (10) nach Anspruch 6, wobei die Antriebsanordnung (24) durch ein Planetengetriebe (28) gebildet ist.

8. Radseitiger Elektromotor (10) nach Anspruch 1, welcher des Weiteren eine Vielzahl von Axial- bzw. Drucklagerplatten (50) aufweist, die in einer übereinanderliegenden Beziehung mit axial gegenüberliegenden Seiten des Rotors (14) und des Stators (12) sind, um das Schmiermittel innerhalb des Spalts (16) abzudichten und zu halten.

9. Radseitiger Elektromotor (10), der Folgendes aufweist:
einen Stator (12);
einen Rotor (14), der sich entlang einer Achse (A) erstreckt und innerhalb des Stators (12) beweglich angeordnet ist, um einen Spalt (16) dazwischen zu bilden;
eine zentrale Welle (18), die sich von dem Rotor (14) nach außen erstreckt und betriebsfähig mit einer Antriebsanordnung (24) verbunden ist;
eine Radnabenanordnung (36), die betriebsfähig mit der Antriebsanordnung (24) verbunden ist, um den radseitigen Elektromotor (10) mit einem Rad eines Fahrzeugs zu verbinden;
wenigstens ein Lagerelement (20), das in abstützender Beziehung mit der Radnabenanordnung (36) angeordnet ist; und
ein Schmiermittel (22), das sich in dem Spalt (16) befindet, um eine Schmiermittelabstützung des Rotors (14) innerhalb des Stators (12) zu erzeugen.

10. Radseitiger Elektromotor (10) nach Anspruch 9, wobei die Antriebsanordnung (24) durch ein Planetengetriebe (28) gebildet ist.

11. Radseitiger Elektromotor (10) nach Anspruch 10, wobei die Radnabenanordnung (36) eine zentrale Nabenachse (38) aufweist, die sich in axial ausgerichteter Beziehung mit der Achse (A) von einer Radnabenlagerung (26) zu einer Getriebeaufnahme (40) erstreckt, die in einer betriebsfähig verbundenen Beziehung mit dem Planetengetriebe (28) ist, und wobei das wenigstens eine Lagerelement (20) in abstützender und eingreifender Beziehung mit der zentralen Nabenachse (38) angeordnet ist.

12. Radseitiger Elektromotor (10) nach Anspruch 11, wobei die Radnabenanordnung (36) eine Wellenfeder (42) aufweist, die zwischen dem wenigstens einen Lagerelement (20) und dem Planetengetriebe (28) angeordnet ist.

13. Radseitiger Elektromotor (10) nach Anspruch 9, welcher des Weiteren eine Vielzahl von Axial- bzw. Drucklagerplatten (50) aufweist, die in einer übereinanderliegenden Beziehung mit axial gegenüberliegenden Seiten des Rotors (14) und des Stators (12) sind, um das Schmiermittel (22) innerhalb des Spalts (16) abzudichten und zu halten.

14. Radseitiger Elektromotor (10) nach Anspruch 11, wobei die zentrale Welle (18) mit einem Sonnenrad (30) des Planetengetriebes (28) verbunden ist, und wobei die Getriebeaufnahme (40) betriebsfähig mit Planetenrädern (32) des Planetengetriebes (28) verbunden ist.

## Revendications

1. Un moteur électrique d'embout de roue (10) comprenant :
un stator (12) ;
un rotor (14) s'étendant le long d'un axe (A) et disposé de manière mobile à l'intérieur dudit stator (12) pour définir un espace (16) entre eux ;
un arbre central (18) s'étendant le long dudit axe (A) et vers l'extérieur dudit rotor (14);
au moins un élément de palier (20) disposé en relation de support avec ledit arbre central (18) pour fournir un support de palier dudit rotor (14) à l'intérieur dudit stator (12) ; et
un lubrifiant (22) disposé dans ledit espace (16) pour fournir un support de lubrifiant auxiliaire dudit rotor (14) à l'intérieur dudit stator (12).

2. Moteur électrique d'embout de roue (10) selon la revendication 1, dans lequel ledit au moins un élément de palier (20) comprend une pluralité d'éléments de palier (20).

3. Moteur électrique d'embout de roue (10) selon la revendication 2, dans lequel ledit arbre central (18) s'étend vers l'extérieur depuis des côtés axiaux opposés dudit rotor (14) et ladite pluralité d'éléments de palier (20) comprend une paire d'éléments de palier (20) chacun disposé adjacent à l'un desdits côtés axialement opposés dudit rotor (14) en relation de support avec une partie respective dudit arbre central (18).

4. Moteur électrique d'embout de roue (10) selon la revendication 1, dans lequel ledit arbre central (18) dudit rotor (14) s'étend à un support de moyeu de roue (26) faisant partie intégrante dudit arbre central (18) et configuré pour recevoir une roue d'un véhicule.

5. Moteur électrique d'embout de roue (10) selon la revendication 5, dans lequel ledit arbre central (18) comprend un ressort ondulé (42) disposé entre ledit au moins un palier (20) et ledit rotor (14).

6. Moteur électrique d'embout de roue (10) selon la revendication 1, dans lequel ledit arbre central (18) dudit rotor (14) est fonctionnellement interconnecté à un ensemble d'entraînement (24) pour coupler le moteur électrique d'embout de roue (10) à une roue d'un véhicule.

7. Moteur électrique d'embout de roue (10) selon la revendication 6, dans lequel ledit ensemble d'entraînement (24) est composé d'un réducteur à engrenage planétaire (28).

8. Moteur électrique d'embout de roue (10) selon la revendication 1, comprenant en outre une pluralité de plaques de palier de butée (50) disposées en relation de superposition avec des côtés axialement opposés dudit rotor (14) et dudit stator (12) pour couvrir ledit espace (16) pour sceller et retenir ledit lubrifiant à l'intérieur dudit espace (16).

9. Moteur électrique d'embout de roue (10) comprenant :
un stator (12) ;
un rotor (14) s'étendant le long d'un axe (A) et disposé de manière mobile à l'intérieur dudit stator (12) pour définir un espace (16) entre eux ;
un arbre central (18) s'étendant vers l'extérieur dudit rotor (14) et relié de manière fonctionnelle à un ensemble d'entraînement (24) ;
un ensemble de moyeu de roue (36) relié de manière fonctionnelle audit ensemble d'entraînement (24) pour coupler le moteur électrique d'embout de roue (10) à une roue d'un véhicule ;
au moins un élément de palier (20) disposé en relation de support avec ledit ensemble de moyeu de roue (36) ; et
un lubrifiant (22) disposé dans ledit espace (16) pour fournir un support de lubrifiant dudit rotor (14) à l'intérieur dudit stator (12).

10. Moteur électrique d'embout de roue (10) selon la revendication 9, dans lequel ledit ensemble d'entraînement (24) est composé d'un réducteur à engrenage planétaire (28).

11. Moteur électrique d'embout de roue (10) selon la revendication 10, dans lequel ledit ensemble de moyeu de roue (36) comprend un axe de moyeu central (38) s'étendant dans une relation alignée axialement avec ledit axe (A) depuis un support de moyeu de roue (26) jusqu'à un support d'engrenage (40) disposé en relation fonctionnellement interconnectée avec ledit réducteur à engrenage planétaire (28) et ledit au moins un palier (20) est disposé en relation de support et d'engagement avec ledit axe de moyeu central (38).

12. Moteur électrique d'embout de roue (10) selon la revendication 11, dans lequel ledit ensemble de moyeu de roue (36) comprend un ressort ondulé (42) disposé entre ledit au moins un palier (20) et ledit réducteur à engrenage planétaire (28).

13. Moteur électrique d'embout de roue (10) selon la revendication 9, comprenant en outre une pluralité de plaques de palier de butée (50) disposées en relation de superposition avec des côtés axialement opposés dudit rotor (14) et dudit stator (12) pour couvrir ledit espace (16) pour sceller et retenir ledit lubrifiant (22) à l'intérieur dudit espace (16).

14. Moteur électrique d'embout de roue (10) selon la revendication 11, dans lequel ledit arbre central (18) est interconnecté à une roue solaire (30) dudit réducteur à engrenage planétaire (28) et ledit support d'engrenage (40) est interconnecté de manière fonctionnelle aux engrenages planétaires (32) dudit réducteur à engrenage planétaire (28).
